(19) Europäisches Patentamt
European Patent Office
Office européen des brevets

(11) **EP 1 802 063 B1**

(12) **EUROPEAN PATENT SPECIFICATION**

(45) Date of publication and mention
of the grant of the patent:
**08.04.2009 Bulletin 2009/15**

(51) Int Cl.:
*H04L 27/26* (2006.01)

(21) Application number: **05027942.1**

(22) Date of filing: **20.12.2005**

(54) **Method and device for notching the transmission band of an analog signal, in particular an MB-OFDM signal**

Verfahren und Vorrichtung zur Sperrung des Übertragungsbands eines analogen Signals, insbesondere eines MB-OFDM Signals

Procédé et dispositif pour la suppression de la bande de transmission d'un signal analogue, en particulier d'un signal MB-OFDM

(84) Designated Contracting States:
**DE FR GB IT**

(43) Date of publication of application:
**27.06.2007 Bulletin 2007/26**

(73) Proprietor: **STMicroelectronics N.V.**
**1118 BH Schiphol Airport Amsterdam (NL)**

(72) Inventors:
• **Kirsch, Miguel**
**1231 Conches (CH)**
• **Cattenoz, Régis**
**74100 Annemasse (FR)**
• **Tanrikulu, Stéphane**
**74100 Annemasse (FR)**
• **Cattaneo, Chiara**
**01630 Sergy (FR)**
• **Corsi, Fédérico**
**1220 Geneva (CH)**

(74) Representative: **Zapalowicz, Francis**
**Bureau Casalonga & Josse**
**Bayerstrasse 71/73**
**80335 München (DE)**

(56) References cited:
**WO-A-00/31938**          **US-B1- 6 873 650**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to the wireless communication systems, especially to level attenuation within a given transmission band and more particularly for processing interferences within different wireless communication apparatuses.

A non-limitative application of the invention is directed to devices operating according to the Ultra Wide Band (UWB) standard based on a multiband OFDM (Orthogonal Frequency-Division Multiplexing) modulation scheme, called MB-OFDM, which can generate interferences towards other wireless systems, and particularly a WIMAX device which is a fix wireless device (Worldwide Interoperability for Microwave Access). Such a WIMAX device operates for example with a band width of 20 MHz at a central frequency of 3,5 GHz, whereas the frequency band of the MB-OFDM system lies between 3,1 and 10,6 GHz.

Wireless personal area networks based on OFDM and UWB technologies like the MB-OFDM standard will directly interfere to narrowband interferer which are close to such wide band devices. At present, no specific interference mitigation techniques are implemented in the UWB standard based on OFDM.

Orthogonal frequency-Division Multiplexing (OFDM) is a method of digital modulation in which a signal is split into several narrowband channels (sub-carriers) at different frequencies. In order to avoid in-band spectral interference, it is proposed to reach a given attenuation level within a given transmission band of the interfering signal.

For example, one method consists in modulating (or zeroing) the transmitted sub-carriers located within said given transmission band in order to try to cancel the signal energy found in this given band.

However, because of side lobes amplitude of the remaining transmitted sub-carriers (these side lobes being produced by the sin(x)/x shape spectrum of each transmitted sub-carrier), it is generally difficult to reach relatively high attenuation levels within a given band of the transmitted OFDM symbol.

In particular, in the coexistence perspective of MB-OFDM systems with other wireless systems, and particularly with WiMax, notches of as much as -30 dB with respect to the OFDM sub-carriers transmission power are requested.

Another type of method permitting to obtain relatively high attenuation levels within a given band of a transmitted signal is disclosed in "Active Interference Cancellation Technique for MB-OFDM Cognitive Radio"; Hirohisa Yamaguchi; 34th European Microwave Conference - Amsterdam 2004.

More precisely, according to this method, the band between sub-carriers $s_1$ and $s_2$ of an OFDM symbol is notched by: 1) zeroing every sub-carrier between $s_1$ and $s_2$, 2) modulating sub-carriers $s_1$ and $s_2$ using coefficients computed, as a function of the OFDM symbol transmitted data, with the target of minimizing the energy in the band $s_1$-$s_2$.

However, such a method is relatively complicated to implement.

Another type of notching is disclosed in WO 0 031 938 which keeps the same resolution of the signal in the frequency domain.

The invention intends to provide a totally different solution to this problem of level attenuation within a part of the transmission band of a signal to be transmitted.

An aim of the invention is to provide such a solution which is particularly simple to implement and which requires no changes in a

In other words, whatever kind of symbol is transmitted, band notched or not, it is completely transparent to the receiver that operates in a standard mode.

Another aim of the invention is to obtain deep band notching for MB-OFDM transmission systems, while substantially preserving the orthogonality between the sub-carriers.

According to an aspect of the invention, the proposed method is based on filtering (either in frequency- or time-domain) the digital initial modulation signal with a frequency resolution higher than that of said initial modulation signal and windowing the filtered signal with a specific windowing mask.

More precisely, according to an aspect of the invention, it is proposed a method of notching the transmission band of an analog signal to be transmitted and including sub-carriers to be modulated from digital modulation coefficients respectively associated to said sub-carriers, said method comprising removing sub-carriers within the part of said transmission band to be notched.

According to a general feature of this aspect of the invention, removing said sub-carriers comprises:

- providing an initial digital signal from successive frequency-domain groups each containing said digital modulation coefficients respectively associated to said sub-carriers,
- filtering said initial signal with a frequency resolution greater than the frequency resolution of said frequency-domain groups in order to remove frequencies corresponding to said sub-carriers to be removed, and
- windowing said filtered signal using a windowing mask having a representation in the frequency-domain including a main lobe and secondary lobes, the power spectrum of said lobes decreasing faster than the inverse of the frequency squared.

As mentioned above, the notching difficulties stem from the side lobes generated by the sin(x)/x spectrum shape of the transmitted sub-carriers.

As a matter of fact, practically this spectrum shape results from the fact that the signal to be transmitted is not an infinite signal but has a limited duration. Mathematically, this spectrum shape results from multiplying a complex exponential by the rectangle function in the time domain, or equivalently, from convolving a delta function with a sin(x)/x function in the frequency domain.

According to this aspect of the invention, the notching difficulties resulting from the prior art methods, can be overcome and higher attenuation level in the transmission band than those obtained with the prior art methods, can be obtained by using in particular a combination of a filtering with a higher resolution and a windowing with a windowing mask, other than a rectangle function, having spectral properties leading to a faster amplitude decay of the side lobes. In other words, whereas the side lobes of a sinc function decrease as the inverse of the frequency squared more or less important, the side lobes (i.e. the secondary lobes) of the frequency domain representation of the windowing mask of the invention decrease faster than the inverse of the frequency squared ($f^{-2}$).

Several conventional windows types can be used for that purpose, as for example the well known Bartlett, Hanning, Hamming, and Blackman window function. Such windows functions arc for example detailed in the book: "Discrete-Time Signal Processing", Oppenheim, Schafer, Prentice-Hall, 1989.

However, depending on the type of windowing mask which is used, the depth of the notch in the transmission band is more or less important, or the orthogonality of the sub-carriers may be more or less affected.

Accordingly, the man skilled in the art will be able to choose the appropriate windowing mask depending on the desired application.

More precisely, in order to obtain relatively deep notch without heavily affecting the orthogonality of the sub-carriers, it is preferable that the elaboration of the windowing mask comprises the use of a Gaussian function.

This is particularly the case for an MB-OFDM transmission system.

More particularly, according to such an embodiment on the invention, elaborating said windowing mask comprises providing a time-domain rectangle mask, performing a time-domain to frequency-domain conversion processing of said rectangle mask with a resolution greater than the frequency resolution of said rectangle mask for obtaining a frequency-domain resulting mask, multiplying said resulting mask with a Gaussian function for obtaining a modified mask, performing a frequency-domain to time-domain conversion processing on said modified mask for obtaining an intermediate time-domain mask, and truncating said intermediate time-domain mask.

The variance of the Gaussian function has an effect on the depth of the notch and on the orthogonality of the transmitted sub-carriers.

For example, in a first approximation, larger variances generating windowing masks closer to the rectangle function lead to weaker depth notches and better orthogonality preservation of the transmitted sub-carriers.

Conversely, smaller variances lead to larger depth notches and worse orthogonality preservation of the transmitted sub-carriers.

Again, the man skilled in the art will be able to choose the variance according to the desired application.

In particular, for MB-OFDM transmission systems, an acceptable interval of variance values is [10, 150].

Many possibilities exist for performing the different steps of this aspect of the invention.

More precisely, according to an embodiment of the invention, it is possible to directly us:c the successive groups of digital modulation coefficients. In other words, according to this embodiment, providing said initial signal comprises providing successive initial frequency-domain symbols respectively corresponding to said successive groups of digital modulation coefficients.

It is also possible to directly work in the time-domain.

In other words, according to such an embodiment, providing said initial signal comprises respectively performing successive frequency-domain to time-domain conversion processing on said successive groups of digital modulation coefficients for obtaining successive initial time-domain symbols.

Turning now to the filtering step, filtering said initial signal may be performed either in the frequency-domain or in the time-domain.

The frequency resolution of said filtering is preferably an integer multiple of the frequency resolution of said frequency-domain groups of digital modulation coefficients. For example, in an MB-OFDM application, if each frequency-domain group contains 128 digital modulation coefficients or samples, the filtering may be performed on 256 samples.

According to an embodiment of the invention in which said filtered signal is a frequency-domain signal, windowing said filtered signal comprises performing a frequency-domain to time-domain conversion processing on said filtered signal before using said windowing mask.

In order to improve the notching, it is also particularly advantageous to adjust the number of bits with which the signal delivered by the windowing means (i.e. the windowed signal) is quantized. Although one or two quantization bits are already enough for leading to an improvement of the notching, it is preferable that the digital to analog conversion processing of said windowed signal be performed on a number of bits greater than 5, and preferably equal to 7.

According to another embodiment of the invention, it is proposed, in addition to filtering and windowing, to introduce an extension of the signal by a cyclic suffix. Such an embodiment permits in particular to recover almost completely the windowing distortion.

In other words, according to such a variant of the invention, providing said initial signal comprises respectively performing successive frequency-domain to time-domain conversion processing on said successive groups of digital modulation coefficients for obtaining successive intermediate time-domain symbols, and adding a suffix to each intermediate symbol for obtaining successive initial time-domain symbols, said suffix of an intermediate symbol being a copy of at least the first sample of said intermediate symbol.

According to an embodiment of the invention, each group of modulation coefficients comprises a first number of modulation coefficients, for example 128, corresponding to a first number of modulated sub-carriers and the signal to be transmitted comprises successive time-domain symbols including a second number of samples, for example 165, said second number being greater than the first number. And said suffix of an intermediate symbol is a copy of the N first samples of said intermediate symbol, N being greater than one and smaller than the difference between said second number and said first number.

For example, N may be equal to 8.

With such an embodiment of the invention using this cyclic suffix, the variance of said Gaussian function is preferably greater than or equal to 20 and smaller than or equal to 60.

According to another aspect of the invention, it is also proposed a device for notching the transmission band of an analog signal to be transmitted and including sub-carriers to be modulated from digital modulation coefficients respectively associated to said sub-carriers, said device comprising processing means adapted to remove sub-carriers within the part of said transmission band to be notched. According to a general feature of this aspect of the invention, said processing means comprises:

- an input for receiving successive frequency-domain groups each containing said digital modulation coefficients respectively associated to said sub-carriers,
- preprocessing means adapted to provide an initial digital signal from said successive frequency-domain groups,
- filtering means adapted to filter said initial signal with a frequency resolution greater than the frequency resolution of said frequency-domain groups in order to remove frequencies corresponding to said sub-carriers to be removed, and
- windowing means adapted to window said filtered signal using a windowing mask having a representation in the frequency-domain including a main lobe and secondary lobes, the power spectrum of said lobes decreasing faster than the inverse of the frequency squared.

Said windowing means may comprise for example:

- a memory containing digital mask coefficients or samples defining said windowing mask, said windowing coefficients having being elaborated from a frequency-domain rectangle mask and a Gaussian function, and
- multiplication means adapted to multiply said filtered signal by said mask coefficients.

According to an embodiment of the invention, said initial signal comprises successive initial frequency-domain symbols respectively corresponding to said successive groups of digital modulation coefficients.

In such an embodiment the processing means do not modify the digital modulation coefficients, and can be considered for example as comprising only the connection between the input of the processing means and the filtering means.

According to another embodiment of the invention, said preprocessing means comprises frequency-domain to time-domain conversion processing means adapted to respectively perform successive frequency-domain to time-domain conversion processing on said successive groups of digital modulation coefficients for obtaining successive initial time-domain symbols.

According to an embodiment of the invention, more particularly directed to the suffix variant, said preprocessing means comprises frequency-domain to time-domain conversion processing means adapted to respectively perform successive frequency-domain to time-domain conversion processing on said successive groups of digital modulation coefficients for obtaining successive intermediate time-domain symbols, and adding means for adding a suffix to each intermediate symbol for obtaining successive initial time-domain symbols, said suffix of an intermediate symbol being a copy of at least the first sample of said intermediate symbol.

Said filtering means may be adapted to perform said filtering of said initial signal either in the frequency-domain or in the time-domain.

When said filtering signal is a frequency-domain signal, said windowing means may comprise frequency-domain to time-domain conversion processing means adapted to perform a frequency-domain to time-domain conversion processing on said filtered signal before using said windowing mask.

According to an embodiment of the invention, the device may further comprise a digital-to-analog conversion stage coupled to the output of said windowing means and arranged to perform a digital-to analog conversion of said windowed signal on a number of bits greater than 5.

The signal to be transmitted may be for example UWB signal modulated according to a MB-OFDM modulation scheme.

According to another aspect of the invention, it is also proposed a transmitter comprising a device as defined above. Said transmitter may belong to a MB-OFDM system.

Other advantages and features of the invention will appear on examining the detailed description of embodiments, these being in no way limiting, and of the appended drawings in which:

- figure 1 is an example of an OFDM symbol power spectrum with a 8 zeroed sub-carriers band according to the prior art,
- figure 2 illustrates diagrammatically a transmitter according to an embodiment of the invention,
- figure 3 illustrates diagrammatically a flow chart according to an embodiment of a method according to the invention,
- figures 4 to 10 illustrate diagrammatically various embodiments of the invention,
- figure 11 is an example of a windowing mask according to the invention,
- figure 12 illustrates a result example of the notching method according to the invention,
- figures 13 to 16 illustrate other examples of notched signals power spectrums and corresponding windowing masks in time and frequency domains, and
- figures 17 to 21 illustrate more particularly another embodiment of the invention directed to the suffix variant.

The invention will be now described in relation with MB-OFDM systems, although the invention is not limited to this particular application.

Conventionally, a MB-OFDM digital baseband symbol is composed of 128 sub-carriers (corresponding to data, pilots, etc.). The transmitted data is generated by computing the IFFT (Inverse Fast Fourier Transform) of 128 frequency-domain digital baseband samples and padding the result with 37 zeroed samples. The whole symbol (165 samples) has a duration of 312.5 ns.

Most of the zero samples are used to cope with multipath channels, and some of them are used to give enough time to the radio subsystem for an eventual band switch (in TFI mode) between consecutive symbols.

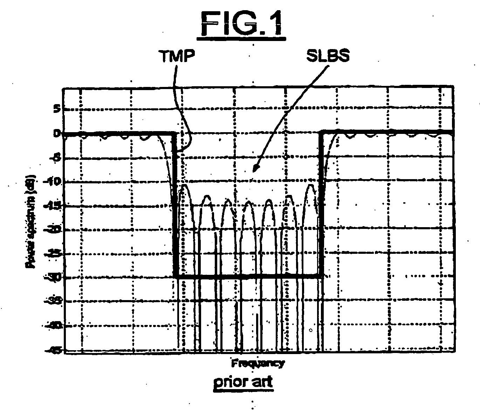

An example of an OFDM symbol power spectrum with an 8 zeroed sub-carriers band (the eight removed sub-carriers are conventionally modulated by coefficients set to zero) is depicted in figure 1. It can be seen that despite the zeroed sub-carriers, the secondary lobes SLBS produced by the sinc shape spectrum of each transmitted sub-carrier, (i.e. the sub-carriers that have not been removed) are only below -10 dB, thus not complying with a notching mask TMP set at -30 dB, as for example requested in the context of MB-OFDM transmission schemes.

The invention will in particular permit to bring a solution to this problem.

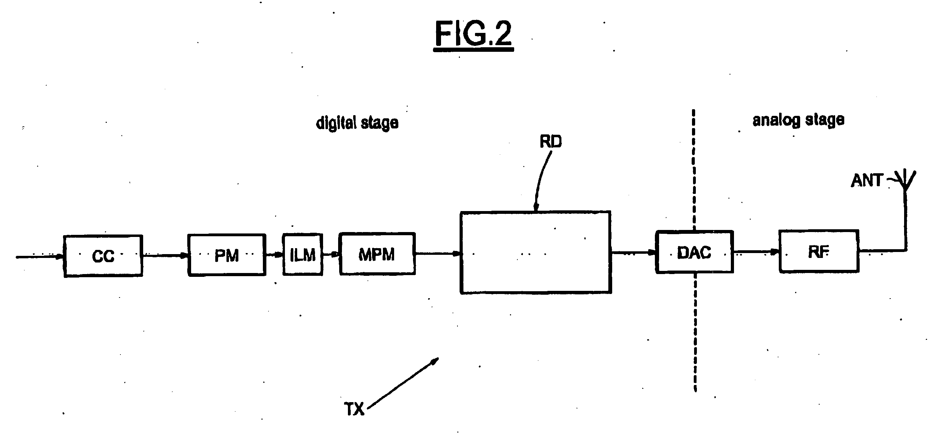

As depicted in figure 2, a transmitter TX according to an embodiment of the invention comprises a digital baseband stage coupled to an analog radio frequency stage by a digital-to-analog conversion stage DAC.

In a conventional manner, the transmission chain comprises an encoder CC, for example a convolutional encoder, receiving data from source coding means and delivering a bits stream to puncturing means PM which delivers a punctured bits streams.

Interleaving means ILM arc connected to the output of the puncturing means and are followed by mapping means MPM which map the bits into symbols according to a modulation mapping scheme depending on the kind of used modulation, for example a BPSK modulation or more generally a QAM modulation.

The successive symbols delivered by the mapping means MPM are MB-OFDM digital baseband symbols. Each symbol is a group containing 128 modulation coefficients respectively associated to 128 sub-carriers to be modulated accordingly.

Of course, a group of 128 samples (modulation coefficients) is delivered on the I branch whereas another corresponding group of 128 samples is delivered on the Q branch.

These successive frequency-domain groups of digital modulation coefficients are then processed in processing means RD which are adapted to remove sub-carriers within a part of the transmission band to be notched.

The means belonging to the digital baseband stage may be realized for example by software within a microprocessor. Another possibility would consist in realizing at least some of these means, for example IFFT or FFT means, by specific ASICs.

The time-domain symbols delivered by the processing means RD are then processed in a conventional radio frequency stage RF after having been converted into the DAC stage, and before being transmitted on air through antenna ANT.

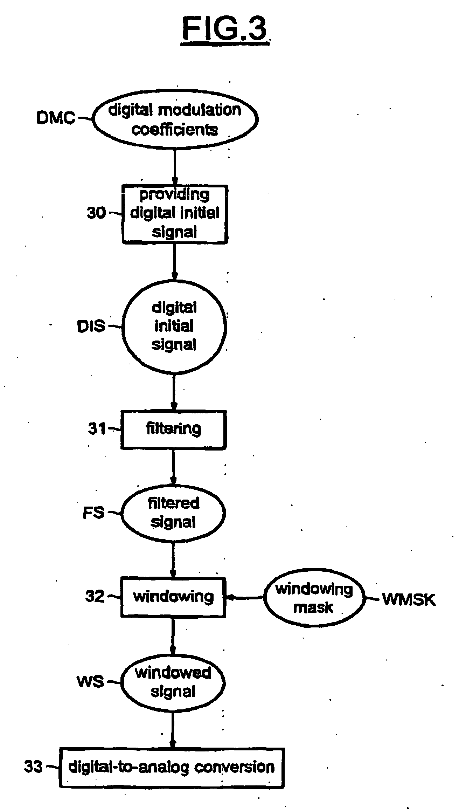

As generally illustrated in figure 3, a digital initial signal DIS is provided (step 30) from the digital modulation coefficients DMC.

Then, this digital initial signal is filtered (step 31) with a frequency resolution greater than the frequency resolution of the frequency-domain groups of the digital modulation coefficients DMC.

The filtered signal FS is then windowed (step 32) by using a windowing mask WMSK and the resulting digital windowed signal WS is converted (step 33) into an analog signal which will be processed by the radio-frequency stage RF.

Various possibilities exist for performing the steps of figure 3.

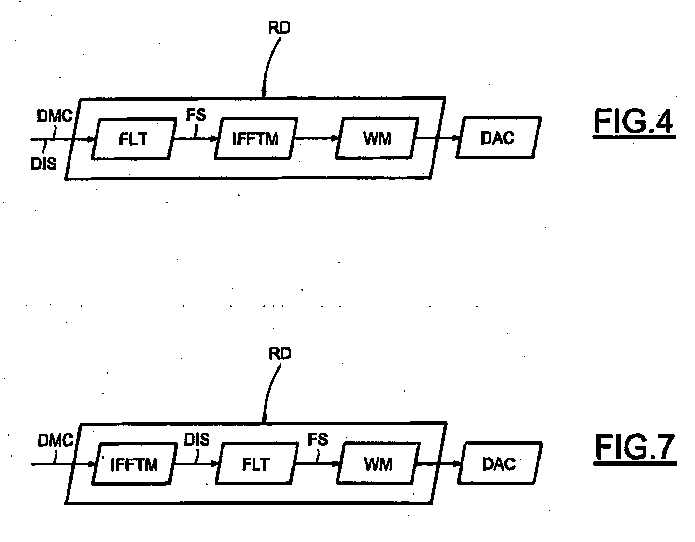

A first variant will be now described with reference to figures 4, 5 and 6 in particular.

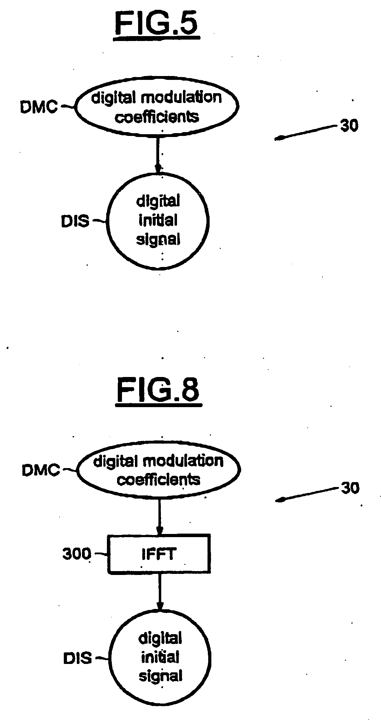

According to this variant, and as illustrated in figure 5, the digital modulation coefficients DMC are directly used for providing the digital initial signal DIS. More precisely, in such a case, the digital initial signal DIS comprises successive initial frequency-domain symbols respectively corresponding to said successive groups of digital modulation coefficients. In other words, the 128 samples of each initial frequency-domain symbol are the 128 corresponding digital modulation coefficients or samples.

This digital initial signal DIS will be then filtered with a frequency resolution greater than the frequency resolution of the groups of digital modulation coefficients. In other words, the length of the filtering, i.e. a number of samples (filter coefficients) used in the filtering, will be greater than the number of samples (here, 128) of each initial frequency-domain symbol. This will permit to filter easily the undesired lobes between sub-carriers.

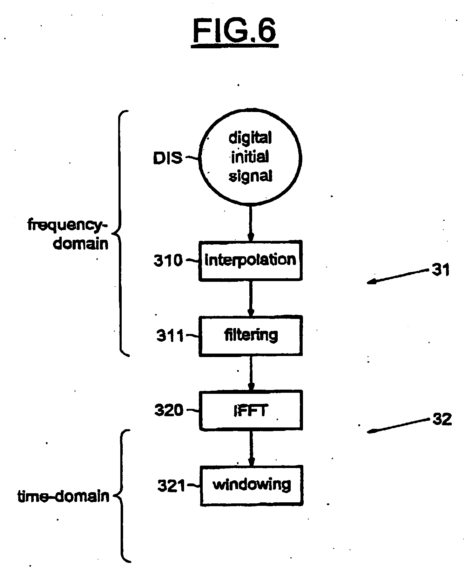

When working in the frequency-domain, as depicted in figure 6, the digital initial signal DIS is firstly interpolated (step 310). If we assume an interpolation factor equal to 2, 256 samples are obtained from the original 128 samples. The desired band to be notched, for example all frequencies between sub-carriers $S_1$ and $S_2$, can be easily notched, for example by setting the corresponding frequency coefficients of the filter to zero.

An interpolation in the frequency-domain can be easily performed by directly computing the interpolated version $Y(n)$ of the frequency-domain signal $X(n)$, ($X(n)$ being here a group of 128 modulation coefficients).

More precisely, the interpolated version $Y(n)$ is given by

$$Y(n) = \frac{1}{M} \sum_{u=0}^{2M-1} \tilde{X}(u) Z(n-u),$$

where M = 128 and

$$\tilde{X}(u) = \begin{cases} X(k), & \text{for } u = 2k \\ 0, & \text{for } u = 2k+1, \end{cases}$$

with $k \in [0, M\text{-}1]$

$$Z(n) = \begin{cases} \dfrac{1 - e^{-j\pi n}}{1 - e^{-j\frac{\pi}{M}n}}, & \text{for } n \neq 0 \\ M, & \text{for } n = 0, \end{cases}$$

Of course, even if the filtering is performed in the frequency-domain, it would have been possible to make an interpolation in the time-domain. For example, the digital initial signal DIS could have been converted in the time-domain by an IFFT processing (Inverse Fast Fourier Transform) then zero-padded with 128 zeros, and then again converted in the frequency-domain by an FFT processing (Fast Fourier Transform). Practically, the FFT and IFFT operators are in fact preferably Discrete Fast Fourier Transform or Discrete Inverse Fast Fourier Transform operating on digital samples.

The filtered signal FS is then converted in the time-domain in frequency-domain to time-domain conversion processing means IFFTM (figure 4) performing Discrete Inverse Fast Fourier Transform 320 (figure 6).

Alternatively, it is possible, as illustrated on figures 7, 8 and 9 to work in the time-domain for the filtering step in particular.

According to this variant of the invention, the digital initial signal DIS comprises successive initial time-domain symbols obtained from the successive groups of digital modulation coefficients DMC by using an IFFT processing 300 performed on means IFFTM (figures 7 and 8).

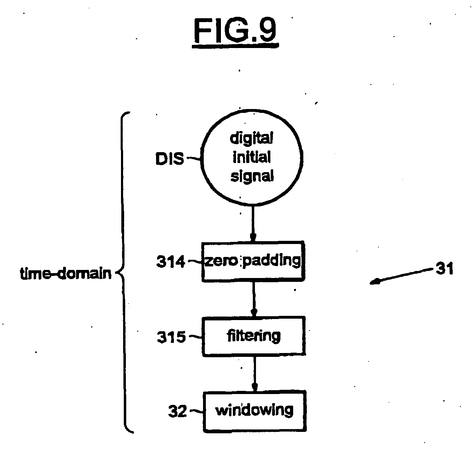

Then, the digital initial signal is zero-padded (step 314, figure 9) in the time-domain for obtaining time-domain symbols, each having 256 samples.

The filtering step 315 is then performed directly in the time-domain.

In this respect, a possible embodiment can consist in computing the filter coefficients in the frequency-domain and then performing an IFFT processing on these filter coefficients for obtaining the filter coefficients in the time-domain which will be used in the filtering step 315.

A truncation of the filtered signal to 165 samples would lead to a resulting notch not having a deep attenuation, in particular not having a deep attenuation of -30 dB as requested in the MB-OFDM standard.

Thus, the filtered signal will be windowed by a windowing mask other than the rectangle function.

This windowing step is performed in the time-domain.

Thus, if the filtering step is performed in the frequency domain, an IFFT processing 320 is necessary before performing the windowing step 321, as illustrated for example in figure 6 or in figure 4.

According to a preferred embodiment of the invention, elaborated said windowing mask comprises:

- providing a time-domain rectangle mask,
- performing a time-domain to frequency-domain conversion processing of said rectangle mask with a resolution greater than the frequency resolution of said rectangle mask for obtaining a frequency-domain resulting mask,
- multiplying said resulting mask with a Gaussian, function for obtaining a modified mask,
- performing a frequency-domain to time-domain conversion processing on said modified mask for obtaining an intermediate time-domain mask, and
- truncating said intermediate time-domain mask.

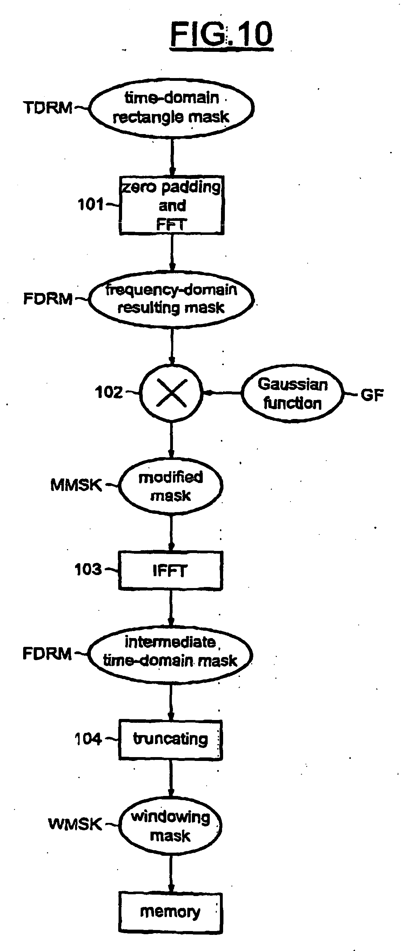

Such an embodiment can be for example implemented as illustrated diagrammatically in figure 10.

More precisely, a time-domain rectangle mask having 165 samples, each sample been equal to 1 for example, is zero-padded to reach 256 samples and then converted in the frequency domain by using a FFT processing (step 101).

The frequency-domain resulting mask FDRM has thus a frequency resolution being twice the frequency resolution of the initial time domain rectangle mask.

This frequency-domain resulting mask FDRM is then multiplied (step 102) by a Gaussian function GF for obtaining a modified mask MMSK, still having 256 samples.

This modified mask is then converted in the time-domain by performing an IFFT processing 103.

The intermediate time-domain mask ITDM obtained after this IFFT processing, still having 256 samples, is then truncated (step 104) to 165 samples for obtaining the windowing mask WMSK.

The time-domain mask samples of the windowing mask are then stored in a memory.

The discrete Gaussian function employed is defined by: $e^{-\pi 2/\sigma 2}$, where $n \in Z$.

An acceptable interval of variance $\sigma^2$ values is [10,150].

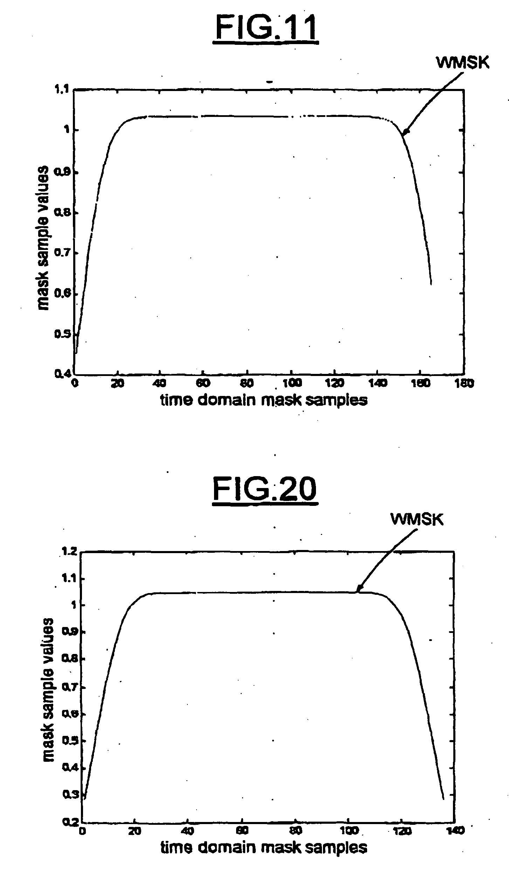

For example, the variance may be equal to 30, which leads to the windowing mask depicted in figure 11 and having the mask sample values contained in Table 1 of Annex A thereafter, this Annex A being a part of the description.

The standard MB-OFDM symbol has only 128 useful samples, where the missing 37 ones to reach 165 samples are set to zero.

In the present variant of the invention, 165 samples are still used after truncation. And although the 37 last samples are not set to zero, this is not a problem since the power of the filtered signal over the last 37 samples is very low compared to the power of the first 128 useful samples.

Actually, the power of the symbol extension (last 37 samples), is even lower because after windowing and quantizing the signal, (with around 7 bits including sign) many of the 37 last samples are finally set to zero.

Adjusting the quantization in the digital-to-analog conversion stage permits also to improve the notch depth. As a matter of fact, the quantization on a sufficient number of bits, preferably greater than five, permits to attenuate the level of the signal ripples over the last 37 samples of each symbol.

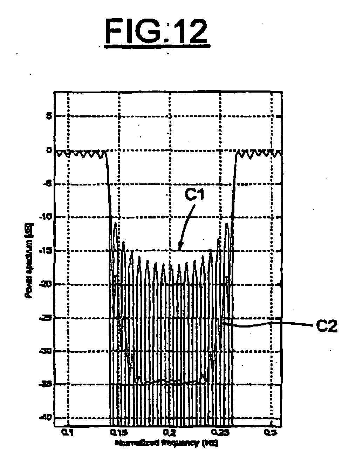

Figure 12 depicts (curve C2) a symbol notched according to the invention in which 16 sub-carriers have been removed. It can be seen that the depth of the notch is greater than -30 dB. This curve C2 is to be compared with curve C1 which represents the power spectrum of a symbol with 16 zeroed sub-carriers obtained by a method according to the prior art.

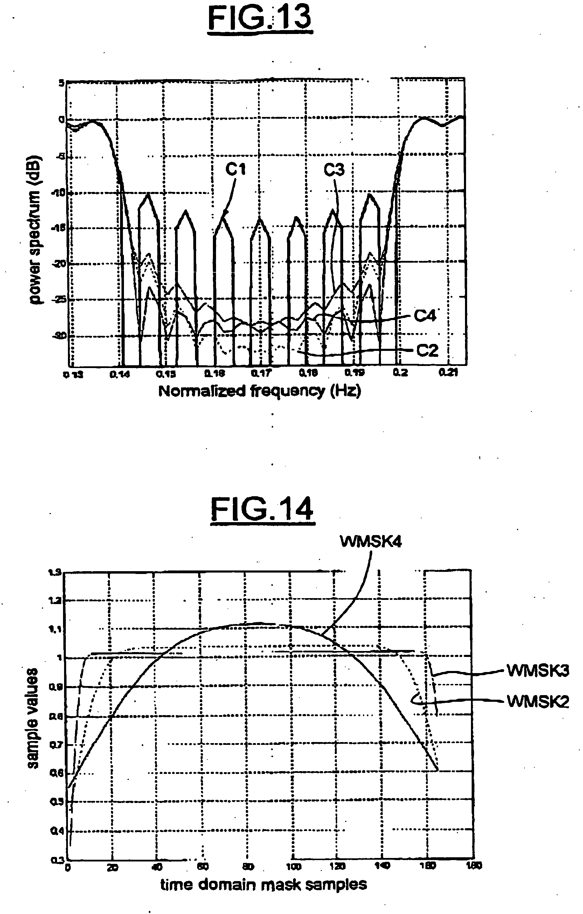

Figure 13 illustrates several notched signal power spectrums obtained using different variance values of the Gaussian function involved in the windowing mask elaboration.

More precisely, whereas curve C1 still illustrates a power spectrum according to the prior art, curve C2 has been obtained with a Gaussian function having a variance equal to 30.

Curve C3 has been obtained with a Gaussian function having a variant equal to 300 whereas curve C4 has been obtained with a Gaussian function having a variance equal to 3.

Figure 14 illustrates the corresponding time-domain windowing mask WMSK2-WMSK4.

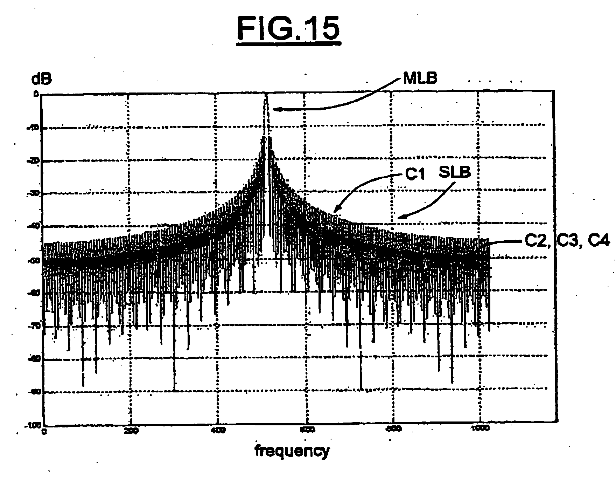

Figure 15 illustrates the frequency representation (curve C1) of a rectangle function having 165 samples and the frequency representation (curves C2, C3 and C4) of the windowing masks WMSK2-WMSK3 of figure 14. It can be seen that each curve has a main lobe MLB and secondary lobes SLB. But whereas the power spectrum of the secondary lobes of curve C1 decrease as the inverse of the frequency squared ($f^{-2}$), the secondary lobes of curves C2-C4 decrease faster than the inverse of frequency squared.

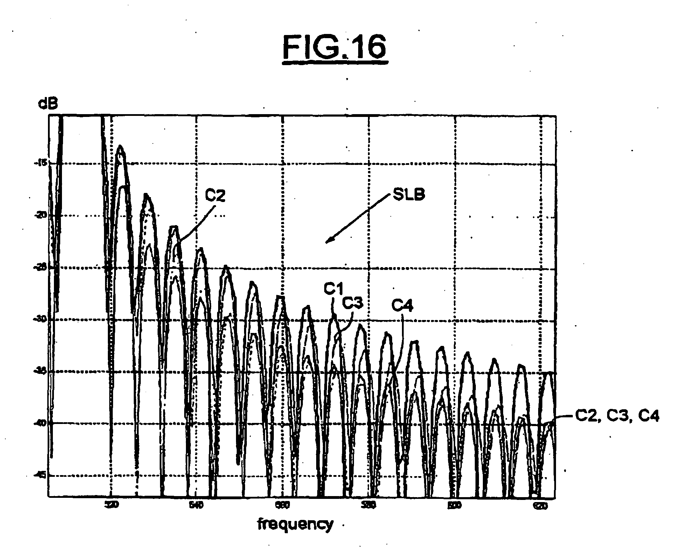

This can be also seen in figure 16 which is an enlarged representation of the right part of figure 15.

Another variant of the invention will be now described with reference to 17 to 21.

The main difference between this variant of the invention and the first variant which has been already described, stems from the extension of the transmitted symbol by a cyclic suffix before filtering and windowing.

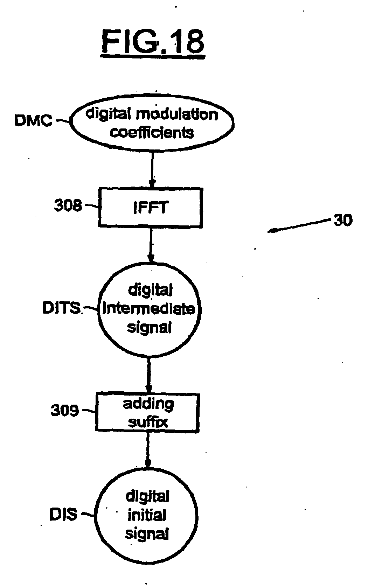

More precisely, as illustrated in particular in figure 18, providing the initial signal DIS comprises respectively performing successive frequency-domain to time-domain conversion processing on the successive groups of digital modulation coefficients DMC for obtaining successive intermediate time-domain symbols DITS, and adding a suffix (step 309) to each intermediate symbol for obtaining successive initial time-domain symbols forming said digital initial signal DIS. And, the suffix of an intermediate symbol is a copy of at least the first sample of said intermediate symbol.

Preferably, in an MB-OFDM application, the cyclic suffix length has been set to 8 samples. This length is a good compromise between the desired window spectral properties and the need of a silent (zeroed) gap at the end of the symbol, long enough to cope with the channel multipath.

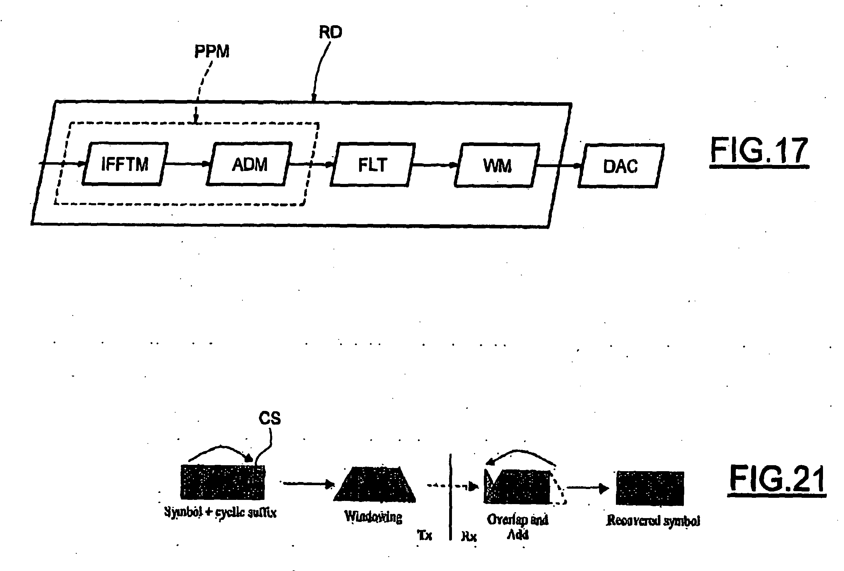

The adding of the cyclic suffix is performed in pre-processing means PPM (figure 17) after the IFFT means referenced IFFTM.

The filtering FLT is preferably made in the time-domain.

However, alternatively, as for the first variant of the invention, the filtering process after the suffix insertion can be done in the frequency-domain instead of the time-domain. In that case, onc additional FFT and IFFT would: be needed since the filtering process comes after the suffix insertion, which is done in the time-domain.

The notching method according to this second variant can be implemented as following:

- IFFT of the OFDM digital symbol (128 samples or digital modulation coefficients),
- adding the cyclic suffix of 8 samples,
- zero-padding to reach 256 samples and band notching (time-domain filtering),
- signal windowing with a windowing mask having 128 + 8 (suffix length) useful samples and 29 zero samples to reach the number 165.

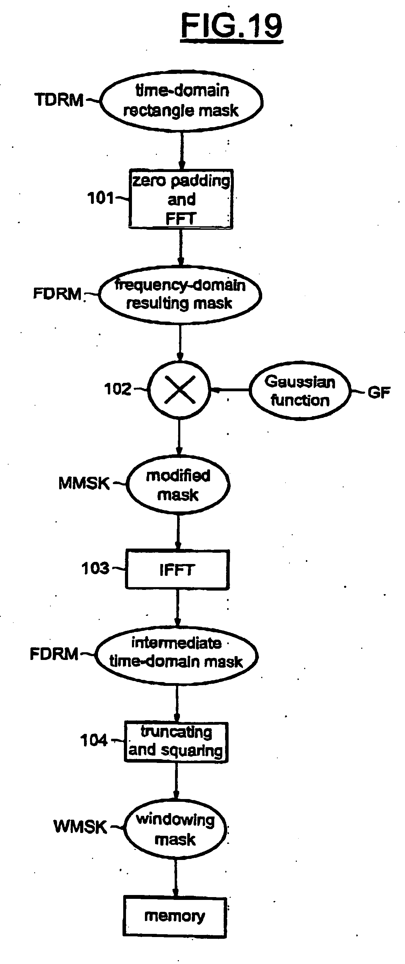

The windowing mask used in this variant of the invention is obtained in a manner essentially analogous to that disclosed with reference to figure 10. However here obtaining the windowing mask further comprises, as illustrated in figure 19, squaring 104 the samples obtained after the truncating step. An example of such windowing mask obtained with a Gaussian function having a variance equal to 35 is depicted in figure 20 and the corresponding mask sample values are detailed in Table 2 of Annex A thereafter.

Conventionally, the symbols are recovered at the receiver by using a so-called "Overlap and Add (OLA) process" well known by the man skilled in the art.

The combination of the cyclic suffix with the chosen window, followed by the overlap and add process at the receiver, allows to compensate for the window distortion of the transmitted symbol.

Figure 21 depicts diagrammatically how after the OLA procedure at the receiver, the original symbol is practically recovered with no windowing distortion. As a result, the receiver performance, in terms of BER: ("bit error rate") has no degradation.

Both variants of the invention which have been described require no changes in the receiver structure. In other words, whatever kind of symbol is transmitted, band notched or not, it is completely transparent to the receiver that operates in the standard mode.

Whereas the first variant of the invention introduces a minor signal spectral distortion, the second variant of the invention recovers (almost completely) the windowing distortion, at the expense of some extra complexity, and a slightly reduced time gap at the end of the symbol to cope with channel multipath.

Annex A

| Table 1 | | Table 2 | |
|---|---|---|---|
| Mask sample number | Mask sample value | Mask Sample number | Mask sample value |
| 1 | 0.4592 | 1 | 0.2850 |
| 2 | 0.4983 | 2 | 0.3314 |
| 3 | 0.5376 | 3 | 0.3804 |
| 4 | 0.5767 | 4 | 0.4315 |
| 5 | 0.6153 | 5 | 0.4837 |

(continued)

| Table 1 | | Table 2 | |
|---|---|---|---|
| Mask sample number | Mask sample value | Mask Sample number | Mask sample value |
| 6 | 0.6530 | 6 | 0.5363 |
| 7 | 0.6896 | 7 | 0.5884 |
| 8 | 0.7247 | 8 | 0.6392 |
| 9 | 0.7581 | 9 | 0.6881 |
| 10 | 0.7895 | 10 | 0.7343 |
| 11 | 0.8190 | 11 | 0.7774 |
| 12 | 0.8462 | 12 | 0.8171 |
| 13 | 0.8712 | 13 | 0.8530 |
| 14 | 0.8940 | 14 | 0.8851 |
| 15 | 0.9145 | 15 | 0.9135 |
| 16 | 0.9328 | 16 | 0.9382 |
| 17 | 0.9490 | 17 | 0.9594 |
| 18 | 0.9632 | 18 | 0.9775 |
| 19 | 0.9755 | 19 | 0.9926 |
| 20 | 0.9862 | 20 | 1.0051 |
| 21 | 0.9953 | 21 | 1.0153 |
| 22 | 1.0030 | 22 | 1.0236 |
| 23 | 1.0094 | 23 | 1.0303 |
| 24 | 1.0148 | 24 | 1.0355 |
| 25 | 1.0192 | 25 | 1.0397 |
| 26 | 1.0228 | 26 | 1.0428 |
| 27 | 1.0257 | 27 | 1.0453 |
| 28 | 1.0280 | 28 | 1.0471 |
| 29 | 1.0299 | 29 | 1.0485 |
| 30 | 1.0313 | 30 | 1.0495 |
| 31 | 1.0325 | 31 | 1.0503 |
| 32 | 1.0334 | 32 | 1.0508 |
| 22 | 1.0340 | 33 | 1.0512 |
| 34 | 1.0345 | 34 | 1.0515 |
| 35 | 1.0349 | 35 | 1.0517 |
| 36 | 1.0352 | 36 | 1.0518 |
| 37 | 1.0354 | 37 | 1.0519 |
| 38 | 1.0356 | 38 | 1.0520 |
| 39 | 1.0357 | 39 | 1.0520 |
| 40 | 1.0358 | 40 | 1.0520 |
| 41 | 1.0358 | 41 | 1.0521 |
| 42 | 1.0359 | 42 | 1.0521 |

(continued)

| Table 1 | | Table 2 | |
|---|---|---|---|
| Mask sample number | Mask sample value | Mask Sample number | Mask sample value |
| 43 | 1.0359 | 43 | 1.0521 |
| 44 | 1.0359 | 44 | 1.0521 |
| 45 | 1.0359 | 45 | 1.0521 |
| 46 | 1.0359 | 46 | 1.0521 |
| 47 | 1.0360 | 47 | 1.0521 |
| 48 | 1.0360 | 48 | 1.0521 |
| 49 | 1.0360 | 49 | 1.0521 |
| 50 | 1.0360 | 50 | 1.0521 |
| 51 | 1.0360 | 51 | 1.0521 |
| 52 | 1.0360 | 52 | 1.0521 |
| 53 | 1.0360 | 53 | 1.0521 |
| 54 | 1.0360 | 54 | 1.0521 |
| 55 | 1.0360 | 55 | 1.0521 |
| 56 | 1.0360 | 56 | 1.0521 |
| 57 | 1.0360 | 57 | 1.0521 |
| 58 | 1.0360 | 58 | 1.0521 |
| 59 | 1.0360 | 59 | 1.0521 |
| 60 | 1.0360 | 60 | 1.0521 |
| 61 | 1.0360 | 61 | 1.0521 |
| 62 | 1.0360 | 62 | 1.0521 |
| 63 | 1.0360 | 63 | 1.0521 |
| 64 | 1.0360 | 64 | 1.0521 |
| 65 | 1.0360 | 65 | 1.0521 |
| 66 | 1.0360 | 66 | 1.0521 |
| 67 | 1.0360 | 67 | 1.0521 |
| 68 | 1.0360 | 68 | 1.0521 |
| 69 | 1.0360 | 69 | 1.0521 |
| 70 | 1.0360 | 70 | 1.0521 |
| 71 | 1.0360 | 71 | 1.0521 |
| 72 | 1.0360 | 72 | 1.0521 |
| 73 | 1.0360 | 73 | 1.0521 |
| 74 | 1.0360 | 74 | 1.0521 |
| 75 | 1.0360 | 75 | 1.0521 |
| 76 | 1.0360 | 76 | 1.0521 |
| 77 | 1.0360 | 77 | 1.0521 |
| 78 | 1.0360 | 78 | 1.0521 |
| 79 | 1.0360 | 79 | 1.0521 |

**EP 1 802 063 B1**

(continued)

| Table 1 | | Table 2 | |
|---|---|---|---|
| **Mask sample number** | **Mask sample value** | **Mask Sample number** | **Mask sample value** |
| 80 | 1.0360 | 80 | 1.0521 |
| 81 | 1.0360 | 81 | 1.0521 |
| 82 | 1.0360 | 82 | 1.0521 |
| 83 | 1.0360 | 83 | 1.0521 |
| 84 | 1.0360 | 84 | 1.0521 |
| 85 | 1.0360 | 85 | 1.0521 |
| 86 | 1.0360 | 86 | 1.0521 |
| 87 | 1.0360 | 87 | 1.0521 |
| 88 | 1.0360 | 88 | 1.0521 |
| 89 | 1.0360 | 89 | 1.0521 |
| 90 | 1.0360 | 90 | 1.0521 |
| 91 | 1.0360 | 91 | 1.0521 |
| 92 | 1.0360 | 92 | 1.0521 |
| 93 | 1.0360 | 93 | 1.0521 |
| 94 | 1.0360 | 94 | 1.0521 |
| 95 | 1.0360 | 95 | 1.0521 |
| 96 | 1.0360 | 96 | 1.0521 |
| 97 | 1.0360 | 97 | 1.0520 |
| 98 | 1.0360 | 98 | 1.0520 |
| 99 | 1.0360 | 99 | 1.0520 |
| 100 | 1.0360 | 100 | 1.0519 |
| 101 | 1.0360 | 101 | 1.0518 |
| 102 | 1.0360 | 102 | 1.0517 |
| 103 | 1.0360 | 103 | 1.0515 |
| 104 | 1.0360 | 104 | 1.0512 |
| 105 | 1.0360 | 105 | 1.0508 |
| 106 | 1.0360 | 106 | 1.0503 |
| 107 | 1.0360 | 107 | 1.0495 |
| 108 | 1.0360 | 108 | 1.0485 |
| 109 | 1.0360 | 109 | 1.0471 |
| 110 | 1.0360 | 110 | 1.0453 |
| 111 | 1.0360 | 111 | 1.0428 |
| 112 | 1.0360 | 112 | 1.0397 |
| 113 | 1.0360 | 113 | 1.0355 |
| 114 | 1.0360 | 114 | 1.0303 |
| 115 | 1.0360 | 115 | 1.0236 |
| 116 | 1.0360 | 116 | 1.0153 |

11

(continued)

| Table 1 | | Table 2 | |
|---|---|---|---|
| Mask sample number | Mask sample value | Mask Sample number | Mask sample value |
| 117 | 1.0360 | 117 | 1.0051 |
| 118 | 1.0360 | 118 | 0.9926 |
| 119 | 1.0360 | 119 | 0.9775 |
| 120 | 1.0360 | 120 | 0.9594 |
| 121 | 1.0360 | 121 | 0.9382 |
| 122 | 1.0360 | 122 | 0.9135 |
| 123 | 1.0360 | 123 | 0.8851 |
| 124 | 1.0359 | 124 | 0.8530 |
| 125 | 1.0359 | 125 | 0.8171 |
| 126 | 1.0359 | 126 | 0.7774 |
| 127 | 1.0359 | 127 | 0.7343 |
| 128 | 1.0359 | 128 | 0.6881 |
| 129 | 1.0358 | 129 | 0.6392 |
| 130 | 1.0358 | 130 | 0.5884 |
| 131 | 1.0357 | 131 | 0.5363 |
| 132 | 1.0356 | 132 | 0.4837 |
| 133 | 1.0354 | 133 | 0.4315 |
| 134 | 1.0352 | 134 | 0.3804 |
| 135 | 1.0349 | 135 | 0.3314 |
| 136 | 1.0345 | 136 | 0.2850 |
| 137 | 1.0340 | 137 | 0 |
| 138 | 1.0334 | 138 | 0 |
| 139 | 1.0325 | 139 | 0 |
| 140 | 1.0313 | 140 | 0 |
| 141 | 1.0299 | 141 | 0 |
| 142 | 1.0280 | 142 | 0 |
| 143 | 1.0257 | 143 | 0 |
| 144 | 1.0228 | 144 | 0 |
| 145 | 1.0192 | 145 | 0 |
| 146 | 1.0148 | 146 | 0 |
| 147 | 1.0094 | 147 | 0 |
| 148 | 1.0030 | 148 | 0 |
| 149 | 0.9953 | 149 | 0 |
| 150 | 0.9862 | 150 | 0 |
| 151 | 0.9755 | 151 | 0 |
| 153 | 0.9632 | 152 | 0 |
| 153 | 0.9490 | 153 | 0 |

(continued)

| Table 1 | | Table 2 | |
|---|---|---|---|
| **Mask sample number** | **Mask sample value** | **Mask Sample number** | **Mask sample value** |
| 154 | 0.9338 | 154 | 0 |
| 155 | 0.9145 | 155 | 0 |
| 156 | 0.8940 | 156 | 0 |
| 157 | 0.8712 | 157 | 0 |
| 158 | 0.8462 | 158 | 0 |
| 159 | 0.8190 | 159 | 0 |
| 160 | 0.7895 | 160 | 0 |
| 161 | 0.1581 | 161 | 0 |
| 162 | 0.7247 | 162 | 0 |
| 163 | 0.6896 | 163 | 0 |
| 164 | 0.6530 | 164 | 0 |
| 165 | 0.6153 | 165 | 0 |

**Claims**

1. Method of notching the transmission band of an analog signal to be transmitted and including sub-carriers to be modulated in accordance with digital modulation coefficients respectively associated to said sub-carriers, said method comprising removing sub-carriers within the part of said transmission band to be notched, wherein removing said sub-carriers comprises providing (30) an initial digital signal from successive frequency-domain groups each containing said digital modulation coefficients respectively associated to said sub-carriers, filtering (31) said initial signal with a frequency resolution greater than the frequency resolution of said frequency-domain groups in order to remove frequencies corresponding to said sub-carriers to be removed and windowing (32) said filtered signal using a widowing mask (WMSK) having a representation in the frequency-domain including a main lobe and secondary lobes, the power spectrum of said lobes decreasing faster than the inverse of the frequency squared.

2. Method according to claim 1, wherein said windowing mask (WMSK) is elaborated from a rectangle mask (TDRM) and a Gaussian function (GF).

3. Method according to claim 2, wherein elaborating said windowing mask comprises providing a time-domain rectangle mask (TDRM) having a frequency resolution, performing (101) a time-domain to frequency-domain conversion processing of said rectangle mask with a resolution greater than the frequency resolution of said rectangle mask for obtaining a frequency-domain resulting mask, multiplying (102) said resulting mask with a Gaussian function for obtaining a modified mask, performing (103) a frequency-domain to time-domain conversion processing on said modified mask for obtaining an intermediate time-domain mask, and truncating (104) said intermediate time-domain mask.

4. Method according to claim 2 or 3, wherein the variance of said Gaussian function is greater than or equal to 10 and smaller than or equal to 150.

5. Method according to any one of the preceding claims, wherein providing said initial signal comprises providing successive initial frequency-domain symbols respectively corresponding to said successive groups of digital modulation coefficients.

6. Method according to any one of claims 1 to 4, wherein providing said initial signal comprises respectively performing successive frequency-domain to time-domain conversion processing on said successive groups of digital modulation coefficients for obtaining successive initial time-domain symbols.

7. Method according to any one of claims 1 to 5, wherein providing said initial signal comprises respectively performing successive frequency-domain to time-domain conversion processing on said successive groups of digital modulation coefficients for obtaining successive intermediate time-domain symbols, and adding a suffix (CS) to each intermediate symbol for obtaining successive initial time-domain symbols, said suffix of an intermediate symbol being a copy of at least the first sample of said intermediate symbol.

8. Method according to claim 7, wherein each group of modulation coefficients comprises a first number of modulation coefficients corresponding to a first number of modulated sub-carriers and the signal to be transmitted comprises successive time-domain symbols including a second number of samples, said second number being greater than the first number, and said suffix of an intermediate symbol is a copy of the N first samples of said intermediate symbol, N being greater than one and smaller than the difference between said second number and said first number.

9. Method according to claim 3 and to any one of claims 7 or 8, wherein elaborating said windowing mask further comprises squaring (104) the samples of the mask obtained after the truncating step.

10. Method according to claim 2 or 3 and to anyone of claims 7 to 9, wherein the variance of said Gaussian function is greater than or equal to 20 and smaller than or equal to 60.

11. Method according to any one of the preceding claims, wherein filtering said initial signal is performed in the frequency-domain.

12. Method according to any one of claims 1 to 10, wherein filtering said initial signal is performed in the time-domain.

13. Method according to any one of the preceding claims, wherein the frequency resolution of said filtering is an integer multiple of the frequency resolution of said frequency-domain groups.

14. Method according to any one of the preceding claims, wherein said filtered signal is a frequency-domain signal and windowing said filtered signal comprises performing a frequency-domain to time-domain conversion processing on said filtered signal before using said windowing mask.

15. Method according to any one of the proceeding claims, further comprising performing a digital-to-analog conversion processing of said windowed signal on a number of bits greater than 5.

16. Method according to any one of the preceding claims, wherein said signal is an UWB signal modulated according to a MB-OFDM modulation scheme.

17. Device for notching the transmission band of an analog signal to be transmitted and including sub-carriers to be modulated from in accordance with digital modulation coefficients respectively associated to said sub-carriers, said device comprising processing means adapted to remove sub-carriers within the part of said transmission band to be notched, wherein said processing means (RD) comprises

- an input for receiving successive frequency-domain groups each containing said digital modulation coefficients respectively associated to said sub-carriers,
- reprocessing means adapted to provide an initial digital signal from said successive frequency-domain groups,
- filtering means adapted to filter said initial signal with a frequency resolution greater than the frequency resolution of said frequency-domain groups in order to remove frequencies corresponding to said sub-carriers to be removed, and
- windowing means adapted to window said filtered signal using a windowing mask having a representation in the frequency-domain including a main lobe and secondary lobes, the power spectrum of said lobes decreasing faster than the inverse of the frequency squared.

18. Device according to claim 17, wherein said windowing means comprises a memory containing digital windowing coefficients defining said windowing mask, said windowing coefficients having being elaborated from a rectangle mask and a Gaussian function, and multiplication means adapted to: multiply said filtered signal by said windowing coefficients.

19. Device according to claim 18, wherein the variance of said Gaussian function is greater than or equal to 10 and smaller than or equal to 150.

20. Device according to any one of claims 17 to 19, wherein said initial signal comprises successive initial frequency-domain symbols respectively corresponding to said successive groups of digital modulation coefficients.

21. Device according to any one of claims 17 to 19, wherein said preprocessing means comprises frequency-domain to time-domain conversion processing means adapted to respectively perform successive frequency-domain to time-domain conversion processing on said successive groups of digital modulation coefficients for obtaining successive initial time-domain symbols.

22. Device according to any one of claims 17 to 20, wherein said preprocessing means comprises frequency-domain to time-domain conversion processing means adapted to respectively perform successive frequency-domain to time-domain conversion processing on said successive groups of digital modulation coefficients for obtaining successive intermediate time-domain symbols, and adding means for adding a suffix (CS) to each intermediate symbol for obtaining successive initial time-domain symbols, said suffix of an intermediate symbol being a copy of at least the first sample of said intermediate symbol.

23. Device according to claim 22, wherein each group of modulation coefficients comprises a first number of modulation coefficients corresponding to a first number of modulated sub-carriers and the signal to be transmitted comprises successive time-domain symbols including a second number of samples, said second number being greater than the first number, and said adding means are configured to add as said suffix of an intermediate symbol a copy of the N first samples of said intermediate symbol, N being greater than one and smaller than the difference between said second number and said first number.

24. Device according to claims 18 and any one of claims 22 or 23, wherein said multiplication means are adapted to multiply said filtered signal by said windowing coefficients having been elaborated from a rectangle mask and a Gaussian function having a variance greater than or equal to 20 and smaller than or equal to 60.

25. Device according to any one of claims 17 to 24, wherein said filtering means are adapted to perform said filtering of said initial signal in the frequency-domain.

26. Device according to any one of claims 17 to 24, wherein said filtering means are adapted to perform said filtering of said initial signal in the time-domain.

27. Device according to any one of claims 17 to 26, wherein said filtering means are adapted to filter said initial signal with a frequency resolution which is an integer multiple of the frequency resolution of said frequency-domain groups.

28. Device according to any one of claims 17 to 27, wherein said filtered signal is a frequency-domain signal and said windowing means comprises frequency-domain to time-domain conversion processing means adapted to perform a frequency-domain to time-domain conversion processing on said filtered signal before using said windowing mask.

29. Device according to any one of claims 17 to 28, further comprising a digital-to-analog conversion stage coupled to the output of said windowing means and arranged to perform a digital-to analog conversion of said windowed signal on a number of bits greater than 5.

30. Device according to any one of claims 17 to 29, wherein said signal is an UWB signal modulated according to a MB-OFDM modulation scheme.

31. Transmitter comprising a device according to any one of claims 17 to 3 0.

32. Transmitter according to claim 31, wherein said device is adapted to operate according to the MB-OFDM standard.

**Patentansprüche**

1. Verfahren zum Kerben (notching) des Übertragungsbands eines zu übertragenden Analogsignals, das Subträger aufweist, die gemäß digitaler Modulationskoeffizienten, die jeweils mit den Subträgern zugeordnet sind, zu modulieren sind, wobei das Verfahren eine Beseitigung von Subträgern innerhalb des zu kerbenden Teils des Übertragungsbands aufweist, wobei die Beseitigung von Subträgern aufweist:

Bereitstellen (30) eines digitalen Anfangssignals aus aufeinanderfolgenden Frequenzbereich-Gruppen, die jeweils die mit den jeweiligen Subträgern zugeordneten digitalen Modulationskoeffizienten enthalten,

Filtern (31) des Anfangssignals mit einer Frequenzauflösung, die größer ist als die Frequenzauflösung der Frequenzbereich-Gruppen, um Frequenzen zu beseitigen, die den zu beseitigenden Subträgern entsprechen, und

Maskieren (32) des gefilterten Signals unter Verwendung einer Fenstermaske (WMSK) mit einer Darstellung im Frequenzbereich, die ein Hauptband und sekundäre Bänder aufweist, wobei das Leistungsspektrum der Bänder schneller abfällt als das Inverse der Frequenz im Quadrat.

2. Verfahren nach Anspruch 1, wobei die Fenstermaske (WMSK) aus einer Rechteckmaske (TDRM) und einer Gaußschen Funktion (GF) ausgearbeitet wird.

3. Verfahren nach Anspruch 2, wobei die Ausarbeitung der Fenstermaske aufweist:

Bereitstellen einer Zeitbereich-Rechteckmaske (TDRM), die eine Frequenzauflösung hat,

Durchführen (101) einer Zeitbereich-zu-Frequenzbereich-Konvertierungsverarbeitung der Rechteckmaske mit einer Auflösung, die größer ist als die Frequenzauflösung der Rechteckmaske, um eine resultierende Frequenzbereich-Maske zu gewinnen,

Multiplizieren (102) der resultierenden Maske mit einer Gaußschen Funktion, um eine modifizierte Maske zu gewinnen,

Durchführen (103) einer Frequenzbereich-zu-Zeitbereich-Konvertierungsverarbeitung an der modifizierten Maske, um eine Zeitbereich-Zwischenmaske zu gewinnen, und

Abschneiden (104) der Zeitbereich-Zwischenmaske.

4. Verfahren nach Anspruch 2 oder 3, wobei die Varianz der Gaußschen Funktion größer oder gleich 10 ist und kleiner oder gleich 150 ist.

5. Verfahren nach einem der vorstehenden Ansprüche, wobei die Bereitstellung des Anfangssignals eine Bereitstellung von aufeinanderfolgenden Frequenzbereich-Anfangssymbolen aufweist, die jeweils den aufeinanderfolgenden Gruppen digitaler Modulationskoeffizienten entsprechen.

6. Verfahren nach einem der Ansprüche 1 bis 4, wobei die Bereitstellung des Anfangssignals eine jeweilige Durchführung von aufeinanderfolgenden Frequenzbereich-zu-Zeitbereich-Konvertierungsverarbeitungen an den aufeinanderfolgenden Gruppen digitaler Modulationskoeffizienten aufweist, um aufeinanderfolgende Zeitbereich-Anfangssymbole zu gewinnen.

7. Verfahren nach einem der Ansprüche 1 bis 5, wobei die Bereitstellung des Anfangssignals eine jeweilige Durchführung von aufeinanderfolgenden Frequenzbereich-zu-Zeitbereich-Konvertierungsverarbeitungen an den aufeinanderfolgenden Gruppen digitaler Modulationskoeffizienten aufweist, um aufeinanderfolgende Zeitbereich-Zwischensymbole zu gewinnen, und Hinzufügen eines Suffixes (CS) zu jedem Zwischensymbol aufweist, um aufeinanderfolgende Zeitbereich-Anfangssymbole zu gewinnen, wobei das Suffix eines Zwischensymbols eine Kopie zumindest des ersten Abtastwerts des Zwischensymbols ist.

8. Verfahren nach Anspruch 7, wobei jede Gruppe von Modulationskoeffizienten eine erste Anzahl von Modulationskoeffizienten aufweist, die einer ersten Anzahl von modulierten Subträgern entspricht, und das zu übertragende Signal aufeinanderfolgende Zeitbereich-Symbole aufweist, die eine zweite Anzahl von Abtastwerten enthalten, wobei die zweite Anzahl größer ist als die erste Anzahl, und das Suffix eines Zwischensymbols eine Kopie der N ersten Abtastwerte des Zwischensymbols ist, wobei N größer als Eins und kleiner als die Differenz zwischen der zweiten Anzahl und der ersten Anzahl ist.

9. Verfahren nach Anspruch 3 und einem der Ansprüche 7 oder 8, wobei die Ausarbeitung der Fenstermaske ferner ein Quadrieren (104) der nach dem Abschneideschritt gewonnenen Abtastwerte der Maske aufweist.

10. Verfahren nach Anspruch 2 oder 3 und nach einem der Ansprüche 7 bis 9, wobei die Varianz der Gaußschen Funktion größer oder gleich 20 und kleiner oder gleich 60 ist.

11. Verfahren nach einem der vorstehenden Ansprüche, wobei das Filtern des Anfangssignals im Frequenzbereich durchgeführt wird.

12. Verfahren nach einem der Ansprüche 1 bis 10, wobei das Filtern des Anfangssignals im Zeitbereich durchgeführt wird.

13. Verfahren nach einem der vorstehenden Ansprüche, wobei die Frequenzauflösung der Filterung ein ganzzahliges Vielfaches der Frequenzauflösung der Frequenzbereich-Gruppen ist.

14. Verfahren nach einem der vorstehenden Ansprüche, wobei das gefilterte Signal ein Frequenzbereich-Signal ist und das Maskieren des gefilterten Signals eine Durchführung einer Frequenzbereich-zu-Zeitbereich-Konvertierungsverarbeitung an dem gefilterten Signal aufweist, bevor die Fenstermaske verwendet wird.

15. Verfahren nach einem der vorstehenden Ansprüche, ferner mit einer Durchführung einer Digital-zu-analog-Konvertierungsverarbeitung des maskierten Signals an einer Anzahl von Bits größer als 5.

16. Verfahren nach einem der vorstehenden Ansprüche, wobei das Signal ein UWB-Signal ist, das gemäß einem MB-OFDM-Modulationsschema moduliert ist.

17. Vorrichtung zum Kerben (notching) des Übertragungsbands eines zu übertragenden analogen Signals, das Subträger aufweist, die gemäß digitaler Modulationskoeffizienten, die jeweils den Subträgern zugeordnet sind, zu modulieren sind, wobei die Vorrichtung eine Verarbeitungseinrichtung aufweist, die in der Lage ist, Subträger innerhalb des zu kerbenden Teils des Übertragungsbands zu beseitigen, wobei die Verarbeitungseinrichtung (RD) aufweist:

  - einen Eingang zum Empfangen von aufeinanderfolgenden Frequenzbereich-Gruppen, die jeweils die den jeweiligen Subträgern zugeordneten digitalen Modulationskoeffizienten enthalten,
  - eine Vorverarbeitungseinrichtung, die in der Lage ist, ein digitales Anfangssignal aus den aufeinanderfolgenden Frequenzbereich-Gruppen bereitzustellen,
  - eine Filtereinrichtung, die in der Lage ist, mit einer Frequenzauflösung, die größer ist als die Frequenzauflösung der Frequenzbereich-Gruppen, das Anfangssignal zu filtern, um Frequenzen, die den zu beseitigenden Subträgern entsprechen, zu beseitigen, und
  - eine Maskierungseinrichtung, die in der Lage ist, das gefilterte Signal unter Verwendung einer Fenstermaske mit einer Darstellung im Frequenzbereich, die ein Hauptband und sekundäre Bänder aufweist, zu maskieren, wobei das Leistungsspektrum der Bänder schneller abfällt als das Inverse der Frequenz im Quadrat.

18. Vorrichtung nach Anspruch 17, wobei die Maskierungseinrichtung aufweist:

  einen Speicher, der digitale Fensterkoeffizienten, die die Fenstermaske definieren, enthält, wobei die Fensterkoeffizienten aus einer Rechteckmaske und einer Gaußschen Funktion ausgearbeitet worden sind, und
  eine Multiplikationseinrichtung, die in der Lage ist, das gefilterte Signal mit den Fensterkoeffizienten zu multiplizieren.

19. Vorrichtung nach Anspruch 18, wobei die Varianz der Gaußschen Funktion größer oder gleich 10 und kleiner oder gleich 150 ist.

20. Vorrichtung nach einem der Ansprüche 17 bis 19, wobei das Anfangssignal aufeinanderfolgende Frequenzbereich-Symbole aufweist, die jeweils den aufeinanderfolgenden Gruppen digitaler Modulationskoeffizienten entsprechen.

21. Vorrichtung nach einem der Ansprüche 17 bis 19, wobei die Vorverarbeitungseinrichtung eine Einrichtung zur Frequenzbereich-zu-Zeitbereich-Konvertierungsverarbeitung aufweist, die in der Lage ist, jeweils aufeinanderfolgende Frequenzbereichzu-Zeitbereich-Konvertierungsverarbeitungen an den aufeinanderfolgenden Gruppen digitaler Modulationskoeffizienten durchzuführen, um aufeinanderfolgende Zeitbereich-Anfangssymbole zu gewinnen.

22. Vorrichtung nach einem der Ansprüche 17 bis 20, wobei die Vorverarbeitungseinrichtung eine Einrichtung zur Frequenzbereich-zu-Zeitbereich-Konvertierungsverarbeitung aufweist, die in der Lage ist, jeweils aufeinanderfolgende Frequenzbereichzu-Zeitbereich-Konvertierungsverarbeitungen an den aufeinanderfolgenden Gruppen digitaler Modulationskoeffizienten durchzuführen, um aufeinanderfolgende Zeitbereich-Zwischensymbole zu gewinnen, und eine Hinzufügeeinrichtung aufweist, um ein Suffix (CS) zu jedem Zwischensymbol hinzuzufügen, um aufeinanderfolgende Zeitbereich-Anfangssymbole zu gewinnen, wobei das Suffix eines Zwischensymbols eine Kopie zumindest des ersten Abtastwerts des Zwischensymbols ist.

23. Vorrichtung nach Anspruch 22, wobei jede Gruppe von Modulationskoeffizienten eine erste Anzahl von Modulationskoeffizienten aufweist, die einer ersten Anzahl von modulierten Subträgern entspricht, und das zu übertragende Signal aufeinanderfolgende Zeitbereich-Symbole aufweist, die eine zweite Anzahl von Abtastwerten enthalten, wobei die zweite Anzahl größer ist als die erste Anzahl, und die Hinzufügeeinrichtungen in der Lage sind, als Suffix eines Zwischensymbols eine Kopie der N ersten Abtastwerte des Zwischensymbols hinzuzufügen, wobei N größer als Eins und kleiner als die Differenz zwischen der zweiten Anzahl und der ersten Anzahl ist.

24. Vorrichtung nach Anspruch 18 und einem der Ansprüche 22 oder 23, wobei die Multiplikationseinrichtung in der Lage ist, das gefilterte Signal mit den Fensterkoeffizienten zu multiplizieren, die aus einer Rechteckmaske und einer Gaußschen Funktion ausgearbeitet worden sind, deren Varianz größer oder gleich 20 und kleiner oder gleich 60 ist.

25. Vorrichtung nach einem der Ansprüche 17 bis 24, wobei die Filtereinrichtung in der Lage ist, die Filterung des Anfangssignals im Frequenzbereich durchzuführen.

26. Vorrichtung nach einem der Ansprüche 17 bis 24, wobei die Filtereinrichtung in der Lage ist, die Filterung des Anfangssignals im Zeitbereich durchzuführen.

27. Vorrichtung nach einem der Ansprüche 17 bis 26, wobei die Filtereinrichtung in der Lage ist, das Anfangssignal mit einer Frequenzauflösung zu filtern, die ein ganzzahliges Vielfaches der Frequenzauflösung der Frequenzbereich-Gruppen ist.

28. Vorrichtung nach einem der Ansprüche 17 bis 27, wobei das gefilterte Signal ein Frequenzbereich-Signal ist und die Maskierungseinrichtung eine Einrichtung zur Frequenzbereich-zu-Zeitbereich-Konvertierungsverarbeitung aufweist, die in der Lage ist, eine Frequenzbereich-zu-Zeitbereich-Konvertierungsverarbeitung an dem gefilterten Signal durchzuführen, bevor die Fenstermaske verwendet wird.

29. Vorrichtung nach einem der Ansprüche 17 bis 28, ferner mit einer Digital-zu-Analog-Konvertierungsstufe, die mit dem Ausgang der Maskierungseinrichtung verbunden ist und in der Lage ist, eine Digital-zu-analog-Konvertierung des maskierten Signals an einer Anzahl von Bits größer als 5 durchzuführen.

30. Vorrichtung nach einem der Ansprüche 17 bis 29, wobei das Signal ein UWB-Signal ist, das gemäß einem MB-OFDM-Modulationsschema moduliert ist.

31. Sender mit einer Vorrichtung gemäß einem der Ansprüche 17 bis 30.

32. Sender gemäß Anspruch 31, wobei die Vorrichtung in der Lage ist, gemäß dem MB-OFDM-Standard zu arbeiten.

**Revendications**

1. Procédé pour encocher la bande de transmission d'un signal analogique à transmettre et comportant des sous-porteuses à moduler selon des coefficients de modulation numérique respectivement associés auxdites sous-porteuses, ledit procédé comprenant le retrait de sous-porteuses de la partie de ladite bande de transmission à encocher, dans lequel le retrait desdites sous-porteuses comprend le fait de fournir (30) un signal numérique initial à partir de groupes successifs du domaine fréquentiel contenant chacun lesdits coefficients de modulation numérique respectivement associés auxdites sous-porteuses, filtrer (31) ledit signal initial avec une définition en fréquence supérieure à la définition en fréquence desdits groupes du domaine fréquentiel afin de supprimer les fréquences correspondant auxdites sous-porteuses à supprimer, puis fenêtrer (32) ledit signal filtré en utilisant un masque de fenêtrage (WMSK) ayant une représentation dans le domaine fréquentiel comportant un lobe principal et des lobes secondaires, le spectre de puissance desdits lobes décroissant plus vite que l'inverse de la fréquence au carré.

2. Procédé selon la revendication 1, dans lequel ledit masque de fenêtrage (WMSK) est élaboré à partir d'un masque en rectangle (TDRM) et d'une fonction gaussienne (GF).

3. Procédé selon la revendication 2, dans lequel l'élaboration dudit masque de fenêtrage comprend le fait de fournir un masque en rectangle du domaine temporel (TDRM) ayant une définition en fréquence, effectuer (101) un traitement de conversion du domaine temporel vers le domaine fréquentiel dudit masque en rectangle avec une définition supérieure à la définition en fréquence dudit masque en rectangle pour obtenir un masque résultant du domaine fréquentiel, multiplier (102) ledit masque résultant avec une fonction gaussienne pour obtenir un masque modifié, effectuer (103) un traitement de conversion du domaine fréquentiel vers le domaine temporel sur ledit masque modifié pour obtenir un masque du domaine temporel intermédiaire, et tronquer (104) ledit masque du domaine temporel intermédiaire.

**4.** Procédé selon la revendication 2 ou 3, dans lequel la variance de ladite fonction gaussienne est supérieure ou égale à 10 et inférieure ou égale à 150.

**5.** Procédé selon l'une quelconque des revendications précédentes, dans lequel la fourniture dudit signal initial comprend le fait de fournir des symboles du domaine fréquentiel initiaux successifs correspondant respectivement auxdits groupes successifs de coefficients de modulation numérique.

**6.** Procédé selon l'une quelconque des revendications 1 à 4, dans lequel la fourniture dudit signal initial comprend le fait d'effectuer respectivement un traitement de conversion du domaine fréquentiel vers le domaine temporel successif sur lesdits groupes successifs de coefficients de modulation numérique pour obtenir des symboles du domaine temporel initiaux successifs.

**7.** Procédé selon l'une quelconque des revendications 1 à 5, dans lequel la fourniture dudit signal initial comprend le fait d'effectuer respectivement un traitement de conversion du domaine fréquentiel vers le domaine temporel successif sur lesdits groupes successifs de coefficients de modulation numérique pour obtenir des symboles du domaine temporel intermédiaires successifs, puis d'ajouter un suffixe (CS) à chaque symbole intermédiaire pour obtenir des symboles du domaine temporel initiaux successifs, ledit suffixe d'un symbole intermédiaire étant une copie d'au moins le premier échantillon dudit symbole intermédiaire.

**8.** Procédé selon la revendication 7, dans lequel chaque groupe de coefficients de modulation comprend un premier nombre de coefficients de modulation correspondant à un premier nombre de sous-porteuses modulées et le signal à transmettre comprend des symboles du domaine temporel successifs comprenant un deuxième nombre d'échantillons, ledit deuxième nombre étant supérieur au premier nombre, et ledit suffixe d'un symbole intermédiaire est une copie des N premiers échantillons dudit symbole intermédiaire, N étant supérieur à un et inférieur à la différence entre ledit deuxième nombre et ledit premier nombre.

**9.** Procédé selon la revendication 3 et selon l'une quelconque des revendications 7 et 8, dans lequel l'élaboration dudit masque de fenêtrage comprend en outre le fait d'élever au carré (104) les échantillons du masque obtenu après l'étape de troncature.

**10.** Procédé selon la revendication 2 ou 3 et selon l'une quelconque des revendications 7 à 9, dans lequel la variance de ladite fonction gaussienne est supérieure ou égale à 20 et inférieure ou égale à 60.

**11.** Procédé selon l'une quelconque des revendications précédentes, dans lequel le filtrage dudit signal initial est exécuté dans le domaine fréquentiel.

**12.** Procédé selon l'une quelconque des revendications 1 à 10, dans lequel le filtrage dudit signal initial est exécuté dans le domaine temporel.

**13.** Procédé selon l'une quelconque des revendications précédentes, dans lequel la définition en fréquence dudit filtrage est un multiple entier de la définition en fréquence desdits groupes du domaine fréquentiel.

**14.** Procédé selon l'une quelconque des revendications précédentes, dans lequel ledit signal filtré est un signal du domaine fréquentiel et le fenêtrage dudit signal filtré comprend l'exécution d'un traitement de conversion du domaine fréquentiel vers le domaine temporel sur ledit signal filtré avant d'utiliser ledit masque de fenêtrage.

**15.** Procédé selon l'une quelconque des revendications précédentes, comprenant en outre l'exécution d'un traitement de conversion numérique-analogique dudit signal fenêtré sur un nombre de bits supérieur à 5.

**16.** Procédé selon l'une quelconque des revendications précédentes, dans lequel ledit signal est un signal UWB modulé selon une technique de modulation MB-OFDM.

**17.** Dispositif pour encocher la bande de transmission d'un signal analogique à transmettre et comportant des sous-porteuses à moduler selon des coefficients de modulation numérique respectivement associés auxdites sous-porteuses, ledit dispositif comprenant un moyen de traitement adapté pour supprimer des sous-porteuses de la partie de ladite bande de transmission à encocher, dans lequel ledit moyen de traitement (RD) comprend :

- une entrée permettant de recevoir des groupes successifs du domaine fréquentiel contenant chacun lesdits coefficients de modulation numérique respectivement associés auxdites sous-porteuses,
- un moyen de prétraitement adapté pour fournir un signal numérique initial à partir desdits groupes successifs du domaine fréquentiel,
- un moyen de filtrage adapté pour filtrer ledit signal initial avec une définition en fréquence supérieure à la définition en fréquence desdits groupes du domaine fréquentiel afin de supprimer les fréquences correspondant auxdites sous-porteuses à supprimer, et
- un moyen de fenêtrage adapté pour fenêtrer ledit signal filtré en utilisant un masque de fenêtrage ayant une représentation dans le domaine fréquentiel comportant un lobe principal et des lobes secondaires, le spectre de puissance desdits lobes décroissant plus vite que l'inverse de la fréquence au carré.

18. Dispositif selon la revendication 17, dans lequel ledit moyen de fenêtrage comprend une mémoire contenant des coefficients de fenêtrage numérique définissant ledit masque de fenêtrage, lesdits coefficients de fenêtrage ayant été élaborés à partir d'un masque en rectangle et d'une fonction gaussienne, et un moyen de multiplication adapté pour multiplier ledit signal filtré par lesdits coefficients de fenêtrage.

19. Dispositif selon la revendication 18, dans lequel la variance de ladite fonction gaussienne est supérieure ou égale à 10 et inférieure ou égale à 150.

20. Dispositif selon l'une quelconque des revendications 17 à 19, dans lequel ledit signal initial comprend des symboles du domaine fréquentiel initiaux successifs correspondant respectivement auxdits groupes successifs de coefficients de modulation numérique.

21. Dispositif selon l'une quelconque des revendications 17 à 19, dans lequel ledit moyen de prétraitement comprend un moyen de traitement de conversion du domaine fréquentiel vers le domaine temporel adapté pour effectuer respectivement un traitement de conversion du domaine fréquentiel vers le domaine temporel successif sur lesdits groupes successifs de coefficients de modulation numérique pour obtenir des symboles initiaux successifs du domaine temporel.

22. Dispositif selon l'une quelconque des revendications 17 à 20, dans lequel ledit moyen de prétraitement comprend un moyen de traitement de conversion du domaine fréquentiel vers le domaine temporel adapté pour effectuer respectivement un traitement de conversion du domaine fréquentiel vers le domaine temporel successif sur lesdits groupes successifs de coefficients de modulation numérique pour obtenir des symboles intermédiaires successifs du domaine temporel, et un moyen d'addition pour ajouter un suffixe (CS) à chaque symbole intermédiaire pour obtenir des symboles du domaine temporel initiaux successifs, ledit suffixe d'un symbole intermédiaire étant une copie d'au moins le premier échantillon dudit symbole intermédiaire.

23. Dispositif selon la revendication 22, dans lequel chaque groupe de coefficients de modulation comprend un premier nombre de coefficients de modulation correspondant à un premier nombre de sous-porteuses modulées et le signal à transmettre comprend des symboles du domaine temporel successifs comprenant un deuxième nombre d'échantillons, ledit deuxième nombre étant supérieur au premier nombre, et ledit moyen d'addition est configuré pour ajouter comme suffixe d'un symbole intermédiaire une copie des N premiers échantillons dudit symbole intermédiaire, N étant supérieur à un et inférieur à la différence entre ledit deuxième nombre et ledit premier nombre.

24. Dispositif selon les revendications 18 et l'une quelconque des revendications 22 et 23, dans lequel ledit moyen de multiplication est adapté pour multiplier ledit signal filtré par lesdits coefficients de fenêtrage ayant été élaborés à partir d'un masque en rectangle et d'une fonction gaussienne ayant une variance supérieure ou égale à 20 et inférieure ou égale à 60.

25. Dispositif selon l'une quelconque des revendications 17 à 24, dans lequel ledit moyen de filtrage est adapté pour exécuter le filtrage dudit signal initial dans le domaine fréquentiel.

26. Dispositif selon l'une quelconque des revendications 17 à 24, dans lequel ledit moyen de filtrage est adapté pour exécuter le filtrage dudit signal initial dans le domaine temporel.

**27.** Dispositif selon l'une quelconque des revendications 17 à 26, dans lequel ledit moyen de filtrage est adapté pour filtrer ledit signal initial avec une définition en fréquence qui est un multiple entier de la définition en fréquence desdits groupes du domaine fréquentiel.

**28.** Dispositif selon l'une quelconque des revendications 17 à 27, dans lequel ledit signal filtré est un signal du domaine fréquentiel et ledit moyen de fenêtrage comprend un moyen de traitement de conversion du domaine fréquentiel vers le domaine temporel adapté pour exécuter un traitement de conversion du domaine fréquentiel vers le domaine temporel sur ledit signal filtré avant d'utiliser ledit masque de fenêtrage.

**29.** Dispositif selon l'une quelconque des revendications 17 à 28, comprenant en outre un étage de conversion numérique-analogique couplé à la sortie dudit moyen de fenêtrage et adapté pour effectuer une conversion numérique-analogique dudit signal fenêtré sur un nombre de bits supérieur à 5.

**30.** Dispositif selon l'une quelconque des revendications 17 à 29, dans lequel ledit signal est un signal UWB modulé selon une technique de modulation MB-OFDM.

**31.** Emetteur comprenant un dispositif selon l'une quelconque des revendications 17 à 30.

**32.** Emetteur selon la revendication 31, dans lequel ledit dispositif est adapté pour fonctionner selon la norme MB-OFDM.

# FIG.1

prior art

FIG.2

# FIG.3

DMC — ( digital modulation coefficients )

↓

30 — [ providing digital initial signal ]

↓

DIS — ( digital initial signal )

↓

31 — [ filtering ]

↓

FS — ( filtered signal )

↓

32 — [ windowing ] ← ( windowing mask ) — WMSK

↓

WS — ( windowed signal )

↓

33 — [ digital-to-analog conversion ]

FIG.4

FIG.7

# FIG.5

DMC — digital modulation coefficients

— 30

DIS — digital initial signal

# FIG.8

DMC — digital modulation coefficients

— 30

300 — IFFT

DIS — digital initial signal

# FIG.6

DIS — digital initial signal

frequency-domain {
310 — interpolation

311 — filtering
}

— 31

320 — IFFT

— 32

time-domain {
321 — windowing
}

# FIG.9

time-domain

DIS — digital initial signal

314 — zero padding

315 — filtering

32 — windowing

— 31

# FIG.10

TDRM — ( time-domain rectangle mask )

↓

101 — [ zero padding and FFT ]

↓

FDRM — ( frequency-domain resulting mask )

↓

102 — ⊗ ← ( Gaussian function ) — GF

↓

MMSK — ( modified mask )

↓

103 — [ IFFT ]

↓

FDRM — ( intermediate time-domain mask )

↓

104 — [ truncating ]

↓

WMSK — ( windowing mask )

↓

[ memory ]

EP 1 802 063 B1

## <u>FIG.11</u>

## <u>FIG.20</u>

30

# FIG.12

## FIG.13

## FIG.14

# FIG.15

# FIG.16

PPM    RD

| IFFTM | ADM | FLT | WM | DAC |

<u>FIG.17</u>

CS

Symbol + cyclic suffix    Windowing    Overlap and Add    Recovered symbol

Tx | Rx

<u>FIG.21</u>

EP 1 802 063 B1

# FIG.18

DMC — digital modulation coefficients

308 — IFFT

— 30

DITS — digital intermediate signal

309 — adding suffix

DIS — digital initial signal

# FIG.19

TDRM — time-domain rectangle mask

101 — zero padding and FFT

FDRM — frequency-domain resulting mask

102 — ⊗ ← Gaussian function — GF

MMSK — modified mask

103 — IFFT

FDRM — intermediate time-domain mask

104 — truncating and squaring

WMSK — windowing mask

memory

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 0031938 A

**Non-patent literature cited in the description**

• **HIROHISA YAMAGUCHI.** Active Interference Cancellation Technique for MB-OFDM Cognitive Radio. *34th European Microwave Conference,* 2004

• Discrete-Time Signal Processing. Prentice-Hall, 1989